# EUROPÄISCHE PATENTSCHRIFT

(11) **EP 1 384 815 B1**
(45) Veröffentlichungstag und Bekanntmachung des Hinweises auf die Patenterteilung: **14.09.2005**
(21) Anmeldenummer: 03450156.9
(22) Anmeldetag: 25.06.2003
(51) Int. Cl.: E01B 27/04

(54) **Verfahren zur Beladung eines Verladezuges**
Method for loading a train of loading skip wagons
Procédé pour le chargement d'une rame de wagons

(30) Priorität: 07.03.2003 AT 15303 U; 23.07.2002 AT 49502 U
(43) Veröffentlichungstag der Anmeldung: 28.01.2004
(73) Patentinhaber: Franz Plasser Bahnbaumaschinen-Industriegesellschaft m.b.H., 1010 Wien (AT)
(72) Erfinder: Theurer, Josef, Wien 1010 (AT)

(56) Entgegenhaltungen:
- EP-A- 0 429 713
- AT-B- 378 973
- AT-U- 5 703
- DE-A- 19 726 554
- FR-A- 1 395 991

## Beschreibung

Die Erfindung betrifft ein Verfahren zur Beladung eines aus mehreren Speicherwagen gebildeten Verladezuges nach den Merkmalen des Oberbegriffes von Anspruch 1.

Gemäß EP 0 429 713 B1 ist bereits ein derartiger Speicherwagen bekannt, der im Arbeitseinsatz mit einer beliebigen Anzahl gleichartiger Wagen zu einem Verladezug gekuppelt werden kann. Im bezüglich einer Transportrichtung der Förderbänder vorderen Bereich des Ladecontainers jedes Speicherwagens ist eine Tasteinrichtung angeordnet, die als Lichtschranke oder als mechanischer Taster ausgebildet ist und beim Speicherungsvorgang das Erreichen des maximalen Befüllungszustandes überwacht.

Die Aufgabe der vorliegenden Erfindung liegt nun in der Schaffung eines Verfahrens der gattungsgemäßen Art, mit dem eine automatische Befüllung des Verladezuges möglich ist.

Erfindungsgemäß wird diese Aufgabe mit einem Verfahren der eingangs genannten Art durch die im Kennzeichen von Anspruch 1 angeführten Merkmale gelöst.

Dieses Verfahren ermöglicht auch bei unterschiedlich anfallenden Schüttgutmengen eine automatische und maximale Befüllung der Speicherwagen, so dass deren wirtschaftlichster Einsatz immer gewährleistet ist. Mit der automatischen Befüllung ist auch ein von der Aufmerksamkeit und Zuverlässigkeit einer Bedienungsperson unabhängiger optimierter Betrieb möglich. Außerdem wird die Sicherheit wesentlich verbessert, da sich eine Bewegung der Bedienungsperson von einem zum nächstfolgenden Speicherwagen im Gefahrenbereich eines Nachbargleises erübrigt.

Weitere Vorteile und Ausbildungen der Erfindung ergeben sich aus den weiteren Ansprüchen und der Zeichnung.

Im folgenden wird die Erfindung anhand von in der Zeichnung dargestellten Ausführungsbeispielen näher beschrieben.

Es zeigen:
Fig. 1,2 und 3 je eine Seitenansicht einer aus mehreren erfindungsgemäß ausgebildeten Speicherwagen zusammengesetzten Anlage zum Schüttguttransport in verschiedenen Beladungszuständen, und
Fig. 4 eine vergrößerte Seitenansicht der Speicherwagen.

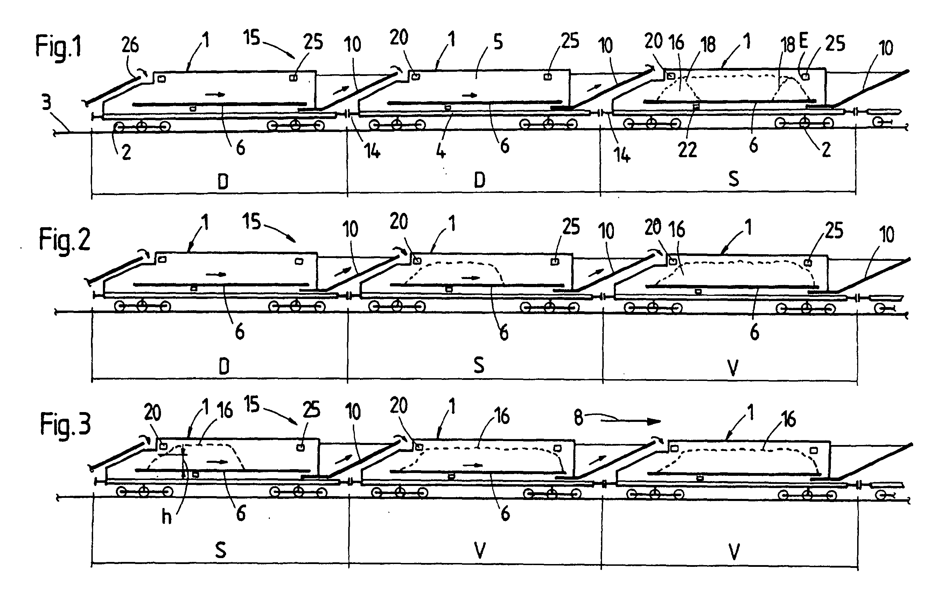

In den Fig. 1 bis 4 dargestellte Speicherwagen 1 bestehen je im wesentlichen aus einem - über zwei Schienenfahrwerke 2 auf einem Gleis 3 verfahrbaren - Wagenrahmen 4 und einem mit diesem verbundenen Ladecontainer 5. Ein in Wagenlängsrichtung verlaufendes Bodenförderband 6 bildet die Bodenfläche des Ladecontainers 5 und weist einen Antrieb 7 zur Beaufschlagung in einer Transportrichtung 8 auf. Am bezüglich dieser Transportrichtung 8 vorderen Ende 9 des Ladecontainers 5 ist ein Übergabeförderband 10 vorgesehen, das unterhalb eines Abwurfendes 11 des Bodenförderbandes 6 an dieses anschließend am Wagenrahmen 4 gelagert ist. Das Übergabeförderband 10 ist schräg nach oben führend über ein vorderes Wagenende 12 vorkragend ausgebildet sowie mit einem Antrieb 13 ausgestattet.

Wie insbesondere in den Fig. 1 bis 3 zu erkennen, ist eine beliebige Anzahl von gleichartig ausgebildeten Speicherwagen 1 anhand von Kupplungseinrichtungen 14 zu einer auf dem Gleis 3 verfahrbaren Anlage bzw. einem Verladezug 15 kuppelbar, mit dem von einer Übergabestelle 26 abgeworfenes Schüttgut 16 gespeichert und/oder transportiert werden kann. Bei einer derartigen Aneinanderkupplung von Speicherwagen 1 bilden die einander endseitig überlappenden Boden- und Übergabeförderbänder 6,10 der einzelnen Wagen eine durchgehende Förderbandstraße, wobei das Schüttgut 16 jeweils von einem Abwurfende 17 eines Übergabeförderbandes 10 auf das Bodenförderband 6 des in Transportrichtung 8 vorgeordneten Speicherwagens 1 weitergegeben wird. Bei höherer Transportgeschwindigkeit der Förderbänder 6,10 wird das Schüttgut 16 in einem sogenannten Durchförderbetrieb (D) durch die Ladecontainer 5 lediglich in Längsrichtung des Verladezuges 15 durchtransportiert. Wird hingegen der Antrieb 7 eines Bodenförderbandes 6 auf langsame Transportgeschwindigkeit geschaltet, so kommt es dadurch im Rahmen eines sogenannten Speicherbetriebes (S) zur Bildung eines Schüttkegels 18 und dementsprechend zur Speicherung des Schüttgutes 16 in diesem Ladecontainer 5.

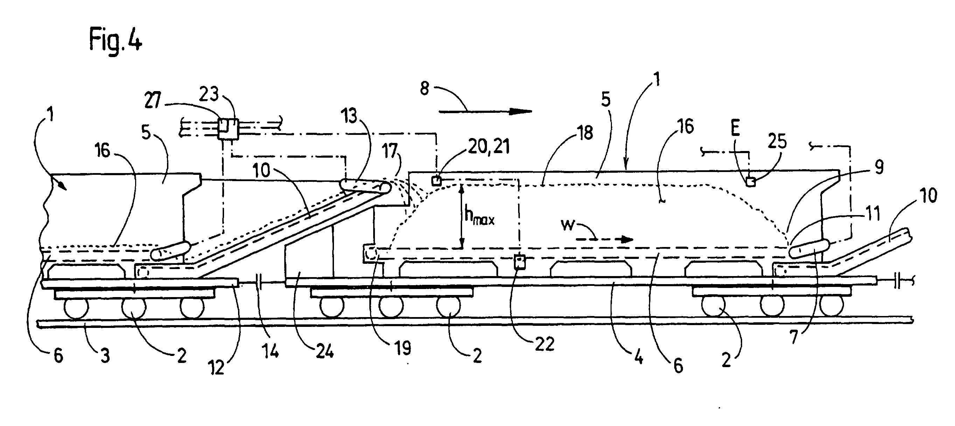

Im bezüglich der Transportrichtung 8 hinteren Ende 19 des Ladecontainers 5 ist eine Tasteinrichtung 20 vorgesehen, die zur laufenden Erfassung des Befüllungszustandes des Speicherwagens 1 dient. Die Tasteinrichtung 20 ist als berührungslos wirkende Laserdistanzmessvorrichtung 21 ausgebildet, die den durch das abgeworfene Schüttgut 16 gebildeten Schüttkegel 18 kontinuierlich abtastet und dabei die Ladehöhe h im Ladecontainer 5 erfasst (als Alternative zur beschriebenen Ausführung wären auch andere Ausbildungen einer Tasteinrichtung denkbar, z.B. in Form einer Lichtschranke oder auch einer mechanisch betätigbaren Vorrichtung). Zusätzlich ist der Speicherwagen 1 mit einer Wegmesseinrichtung 22 ausgestattet, die zur Erfassung eines Transportweges w (in Fig. 4 als strichlierter Pfeil angedeutet) des Bodenförderbandes 6 ausgebildet und mit der Tasteinrichtung 20 verbunden ist. Die Wegmesseinrichtungen 22, Tasteinrichtungen 20 sowie die - aus einer Kraftquelle 24 gespeisten - Förderband-Antriebe 7 und 13 der gesamten Anlage 15 stehen zudem mit einer zentralen Steuereinrichtung 23 in Verbindung.

Im folgenden wird das erfindungsgemäße Verfahren zur Beladung mehrerer zu einem Verladezug 15 miteinander gekuppelten Speicherwagen 1 näher beschrieben:
Zur Befüllung des in Transportrichtung 8 vordersten Speicherwagens 1 (s. Fig.1) ist dieser auf Speicherbetrieb S eingestellt, indem die Transportgeschwindigkeit des zugeordneten Bodenförderbandes 6 im Vergleich zu den restlichen Speicherwagen 1 reduziert ist, deren Boden- und Übergabeförderbänder 6,10 zur Erzielung eines Durchförderbetriebes D mit erhöhter Transportgeschwindigkeit betrieben werden. Damit wird das von der Übergabestelle 26 übergebene Schüttgut 16 durch die in Transportrichtung 8 folgenden Speicherwagen 1 durchgefördert und im vordersten Speicherwagen 1 gespeichert, dessen Übergabeförderband 10 nicht in Betrieb ist.

Die Speicherung erfolgt automatisch dadurch, dass das zugeordnete Bodenförderband 6 mit reduzierter Transportgeschwindigkeit betrieben wird. Diese wird in Abhängigkeit von einer durch einen Messvorgang erfassten Menge des abgeworfenen Schüttgutes 16 derart geregelt, dass eine Schütthöhe h des Schüttkegels 18 eine maximale Höhe erreicht und damit der im Speicherbetrieb S befindliche Speicherwagen 1 automatisch mit einer maximalen Ladehöhe (hₘₐₓ) befüllt wird (Fig.4). Der Messvorgang zur Erfassung der Schütthöhe h wird durch die Laserdistanzmessvorrichtung 21 berührungslos durchgeführt.

Nach Erreichen einer vorderen Endposition E des vordersten bzw. ersten Schüttkegels 18 des abgeworfenen Schüttgutes 16 erfolgt auf dem mit seinem Übergabeförderband 10 angrenzenden, bezüglich der Transportrichtung 8 hinteren Speicherwagen 1 eine automatische Reduktion der Transportgeschwindigkeit des zugeordneten Bodenförderbandes 6 von Durchförderbetrieb D auf Speicherbetrieb S (s.Fig.2). Damit wiederholt sich der soeben beschriebene Verfahrenszyklus zur Befüllung mit einer maximalen Ladehöhe.

Die erwähnte vorderste Endposition E wird durch eine vordere Tasteinrichtung 25 registriert. Diese ist als normal zur Transport- bzw. Wagenlängsrichtung 8 verlaufende Lichtschranke ausgebildet. Zweckmäßigerweise wird die Tasteinrichtung 25 derart positioniert, dass das Bodenförderband 6 zur Entleerung des angrenzenden Übergabeförderbandes 10 des angrenzenden Speicherwagens 1 noch geringfügig weiter bewegbar ist, bis schließlich nach Entleerung des Übergabeförderbandes 10 der vorderste Schüttkegel 18 das vordere Ende 9 des Bodenförderbandes 6 erreicht hat. In diesem Zustand ist der Speichervorgang beendet und der vorderste Speicherwagen 1 über die gesamte Länge seines Bodenförderbandes 6 mit einer maximalen Ladehöhe hₘₐₓ befüllt, damit ist ein voller Ladezustand V erreicht. Das Vorrücken des vordersten Schüttkegels 18 kann alternativ auch durch die Wegmesseinrichtung 22 ermittelt werden.

Nach Befüllung des zweiten Speicherwagens 1 erfolgt wiederum nach Aktivierung dessen vorderer Tasteinrichtung 25 für den nächstfolgenden dritten Speicherwagen 1 eine automatische Umstellung auf Speicherbetrieb S (s. Fig.3) sowie eine abschließende Entleerung des dem dritten Speicherwagen 1 zugeordneten Übergabeförderbandes 10. Im Zusammenhang mit dieser automatischen Befüllung des Verladezuges 15 ist es vorteilhaft, wenn auf der vorzugsweise durch eine Funkverbindung mit den Tasteinrichtungen 20, 25 verbundenen Steuereinrichtung 23 ein Display 27 angeordnet ist, auf dem jederzeit optisch der Befüllungszustand des Verladezuges 15 erkennbar ist.

Der Verladezug 15 kann auch automatisch entladen werden, wobei vorerst der vorderste Speicherwagen 1 geleert wird, bis die Tasteinrichtung 25 das Ende des hintersten Schüttkegels 18 registriert. Danach wird automatisch der zweite Speicherwagen 1 über den ersten Speicherwagen 1 entleert.

## Patentansprüche

1. Verfahren zur Beladung mehrerer gleichartiger, zu einem Verladezug (15) miteinander gekuppelter, je ein Bodenförderband (6) und ein über ein vorderes Wagenende (12) vorkragendes Übergabeförderband (10) aufweisender Speicherwagen (1), wobei ein zu speicherndes Schüttgut (16) von einer Übergabestelle (26) über die in Transportrichtung (8) folgenden, hintereinander angeordneten Boden- und Übergabeförderbänder (6,10) zuerst im vordersten Speicherwagen (1) gespeichert wird, indem dieser durch Reduktion einer Transportgeschwindigkeit des zugeordneten Bodenförderbandes (6) von Durchförderbetrieb (D) auf Speicherbetrieb (S) umgestellt und vom Übergabeförderband (10) des angrenzenden und bezüglich des Speicherbetriebes (S) nächstfolgenden Speicherwagens (1) befüllt wird, **gekennzeichnet durch** folgende automatisch durchgeführte Verfahrensschritte:
a) die Transportgeschwindigkeit des dem im Speicherbetrieb (S) befindlichen Speicherwagen (1) zugeordneten Bodenförderbandes (6) wird in Abhängigkeit von einer **durch** einen Messvorgang erfassten Menge des abgeworfenen Schüttgutes (16) derart geregelt, dass der im Speicherbetrieb (S) befindliche Speicherwagen (1) mit einer maximalen Ladehöhe (hₘₐₓ) befüllt wird,
b) nach Erreichen einer vorderen Endposition (E) eines vordersten Schüttkegels (18) des abgeworfenen Schüttgutes (16) erfolgt auf dem mit seinem Übergabeförderband (10) angrenzenden, bezüglich der Transportrichtung (8) hinteren Speicherwagen (1) eine automatische Reduktion einer Transportgeschwindigkeit des zugeordneten Bodenförderbandes (6) von Durchförderbetrieb (D) auf Speicherbetrieb (S).

2. Verfahren nach Anspruch 1, **dadurch gekennzeichnet, dass** parallel zur Umstellung des Speicherbetriebes (S) auf dem angrenzenden Speicherwagen (1) das diesem zugeordnete Übergabeförderband (10) in den vorgeordneten Speicherwagen (1) zu dessen vollständiger Befüllung entleert wird.

3. Verfahren nach Anspruch 1 oder 2, **dadurch gekennzeichnet, dass** die Menge des abgeworfenen Schüttgutes (16) durch eine berührungslose Messung einer Schütthöhe (h) des durch den Abwurf auf das Bodenförderband (6) gebildeten Schüttkegels (18) gemessen wird.

4. Verfahren nach einem der Ansprüche 1 bis 3, **dadurch gekennzeichnet, dass** eine vordere Endposition (E) des vordersten Schüttkegels (18) durch eine Tasteinrichtung (25) erfasst wird.

5. Verfahren nach einem der Ansprüche 1 bis 4, **dadurch gekennzeichnet, dass** der Ladezustand der Speicherwagen (1) über eine Funkverbindung auf einem Display (27) einer Steuereinrichtung (23) angezeigt wird, durch die auch Antriebe (7,13) der Boden- und Übergabeförderbänder (6,10) steuerbar sind.

## Claims

1. A method of loading several like loading wagons (1) coupled to one another to form a loading train (15), each having a bottom conveyor belt (6) and a transfer conveyor belt (10) projecting over a front end (12) of the wagon, wherein a bulk material (16) to be stored is at first stored in the front-most storage wagon (1) from a transfer station (26) via the bottom- and transfer conveyor belts (6,10) following in the transporting direction (8) and arranged one behind the other, in that said storage wagon (1) is converted from through-transport operational mode (D) to storage operational mode (S) by reduction of a transporting speed of the associated bottom conveyor belt (6) and is filled by the transfer conveyor belt (10) of the adjoining storage wagon (1) following with regard to the storage operational mode (S), **characterized by** the following method steps carried out automatically:
a) the transporting speed of the bottom conveyor belt (6) associated with the storage wagon (1) being in the storage operational mode (S) is adjusted, in dependence upon a quantity of the discharged bulk material (16) detected by a measuring process, in such a way that the storage wagon (1) which is in the storage operational mode (S) is filled with a maximum loading height (hₘₐₓ),
b) after a front-most dump cone (18) of the discharged bulk material (16) reaches a front end position (E), a transporting speed of the associated bottom conveyor belt (6) on the rear storage wagon (1), with regard to the transporting direction (8), adjoining with its transfer conveyor belt (10), is automatically reduced from through-transport operational mode (D) to storage operational mode (S).

2. A method according to claim 1, **characterized in that**, parallel to the conversion of the storage operational mode (S) on the adjoining storage wagon (1), the transfer conveyor belt (10) associated therewith is emptied into the preceding storage wagon (1) for the complete filling thereof.

3. A method according to claim 1 or 2, **characterized in that** the quantity of the discharged bulk material (16) is measured by contact-less measurement of a pouring height (h) of the dump cone (18) formed by the discharge upon the bottom conveyor belt (6).

4. A method according to one of claims 1 to 3, **characterized in that** a front end position (E) of the front-most dump cone (18) is detected by a sensor device (25).

5. A method according to one of claims 1 to 4, **characterized in that** the loading state of the storage wagons (1) is displayed, via a radio connection, on a display (27) of a control device (23) by means of which drives (7,13) of the bottom- and transfer conveyor belts (6,10) can also be controlled.

## Revendications

1. Procédé de chargement de plusieurs wagons de stockage (1) présentant chacun un fond mouvant à bande (6) et une bande de convoyage de transfert (10) débordant au-dessus d'une extrémité avant de wagon (12) et attelés les uns aux autres pour former un convoi de chargement (15), où un matériau en vrac (16) à stocker est stocké d'abord dans le wagon de stockage (1) le plus en avant à partir d'un poste de transfert (26) via les bandes de convoyage du fond mouvant et de transfert (6, 10) disposées l'une derrière l'autre et qui se trouvent à sa suite dans le sens de convoyage (8), wagon qui, par réduction de la vitesse de convoyage du fond mouvant à bande (6) associé, passe du mode de convoyage de passage (D) au mode de stockage (S) et est rempli depuis la bande de convoyage de transfert (10) du wagon de stockage (1) contigu et se trouvant juste après par rapport au mode de stockage (S), **caractérise par** les étapes suivantes du procédé, exécutées automatiquement :
a) la vitesse de convoyage du fond mouvant à bande (6) associé au wagon de stockage (1) se trouvant en mode de stockage (S) est réglée en fonction de la quantité, détectée par un processus de mesure, du matériau en vrac (16) déversé, de manière telle que le wagon de stockage (1) se trouvant en mode de stockage (S) est rempli à une hauteur de chargement maximale (*h*_{*max*})
b) après avoir atteint une position avant terminale (E) d'un amoncellement (18) le plus en avant, du matériau en vrac (16) déversé, il se produit, sur le wagon de stockage (1) qui est en arrière par rapport au sens de convoyage (8) et contigu avec sa bande de convoyage de transfert (10), une réduction automatique de la vitesse de convoyage du fond mouvant à bande (6) associé, depuis le mode de convoyage de passage (D) vers le mode de stockage (S).

2. Procédé selon la revendication 1, **caractérisé en ce que**, parallèlement au passage en mode de stockage (S) sur le wagon de stockage (1) contigu, la bande de convoyage de transfert (10) associée à celui-ci est vidée dans le wagon de stockage (1) précédent jusqu'à son remplissage complet.

3. Procédé selon la revendication 1 ou 2, **caractérisé en ce que** la quantité du matériau en vrac (16) déversé est mesurée par une mesure sans contact d'une hauteur d'amoncellement (h) de l'amoncellement (18) formé par le déversement sur le fond mouvant à bande (6).

4. Procédé selon l'une quelconque des revendications 1 à 3, **caractérisé en ce qu'**une position avant terminale (E) de l'amoncellement (18) le plus en avant est déterminée par un dispositif de détection (25).

5. Procédé selon l'une quelconque des revendications 1 à 4, **caractérisé en ce que** le niveau de chargement du wagon de stockage (1) est indiquée sur un écran (27) d'un dispositif de commande (23) via à une liaison radio, grâce auquel les dispositifs d'entraînement (7, 13) des bandes de convoyage du fond mouvant et de transfert (6, 10) peuvent aussi être commandés.
